# EUROPÄISCHE PATENTSCHRIFT

(11) **EP 0 877 879 B1**
(45) Veröffentlichungstag und Bekanntmachung des Hinweises auf die Patenterteilung: **13.02.2002**
(21) Anmeldenummer: 97952821.3
(22) Anmeldetag: 28.11.1997
(51) Int. Cl.: F16H 61/04, F16D 33/06, F16H 61/64

(54) **VERFAHREN ZUR VERBESSERUNG DER SCHALTQUALITÄT BEIM GANGWECHSEL UND GANGWECHSELSTEUERUNG**
METHOD FOR IMPROVING SHIFT QUALITY DURING GEAR SHIFTING AND GEAR SHIFTING CONTROL
PROCEDE POUR AMELIORER LA QUALITE DE PASSAGE DES VITESSES LORS DU CHANGEMENT DE VITESSES ET COMMANDE DU CHANGEMENT DE VITESSES

(30) Priorität: 04.12.1996 DE 19650339; 15.01.1997 DE 29700605 U
(43) Veröffentlichungstag der Anmeldung: 18.11.1998
(73) Patentinhaber: Voith Turbo GmbH & Co. KG, 89522 Heidenheim (DE)
(72) Erfinder: NITSCHE, Martin, D-89547 Gerstetten (DE); ENGLISCH, Andreas, D-89522 Heidenheim (DE)
(74) Vertreter: Dr. Weitzel & Partner
(86) Internationale Anmeldenummer: EP9706646
(87) Internationale Veröffentlichungsnummer: WO9825054

(56) Entgegenhaltungen:
- EP-A- 0 475 585
- US-A- 3 673 799
- US-A- 5 303 616
- US-A- 5 474 506

## Beschreibung

Die Erfindung betrifft ein Verfahren zur Verbesserung der Schaltqualität beim Wechsel von einer ersten Gangstufe in eine zweite Gangstufe, insbesondere für Hochschaltungen, im einzelnen mit den Merkmalen aus dem Oberbegriff des Anspruchs 1; ferner eine Gangwechselsteuerung mit den Merkmalen aus dem Oberbegriff des Anspruchs 8.

Hydrodynamisch-mechanische Getriebebaueinheiten sind in einer Vielzahl von Ausführungen in Form von Automatgetrieben für den Einsatz in Fahrzeugen allgemein bekannt. Diese weisen im einzelnen wenigstens einen Getriebezweig auf, welcher eine hydrodynamische Kupplung und einen, dieser in Reihe nachgeschalteten mechanischen Getriebeteil umfaßt. Der mechanische Getriebeteil umfaßt Drehzahl-/Drehmomentenwandlungseinrichtungen mit einem entsprechenden Übersetzungsverhältnis, welche über entsprechende Schaltelemente in Betrieb nehmbar sind. Unterschiedliche Gangstufen werden dabei durch die entsprechende Betätigung und/oder das Lösen von Schaltelementen im mechanischen Getriebeteil realisiert. Die einzelnen Drehzahl-/Drehmomentenwandlungseinrichtungen sind vorzugsweise in Form von Stimrad- oder Planetenradsätzen ausgeführt. Zur Realsierung des Gangwechsels ist es erforderlich, die entsprechenden Schaltelemente des mechanischen Getriebeteils zu betätigen bzw. zu lösen. Dabei finden beispielsweise beim Hochschaften in einem Automatikgetriebe zwei Phasen, die sogenannte Drehmomentphase und eine Trägheitsphase statt. Bevor das Hochschalten veranlaßt wird, umfaßt die Drehmomenteneingabe an den Getriebekupplungen nur das durch die Verbrennungskraftmaschine erzeugte Drehmoment, das einen Drehmomentenwandler durchläuft. Während der Phase der Übertragung des Drehmomentes wird der Druck auf das einzulegende Kupplungsteil ausgeübt. Dieses Drehmoment wird zwischen der zu lösenden Kupplung und der einzulegenden Kupplung aufgeteilt. Am Ende der Phase des Drehmomentes fällt das durch die zu lösende Kupplung getragene Drehmoment auf Null ab und das gesamte Drehmoment wird von der einzulegenden Kupplung übertragen. Nachdem die Übertragung des Drehmomentes vervollständigt wurde, beginnt die Phase der Übertragung des Übersetzungsverhältnisses, die sogenannte Trägheitsphase. Während dieser Phase wird die Drehzahl der Verbrennungskraftmaschine schnell auf den Wert des neuen Übersetzungsverhältnisses gesenkt, und zwar in dem Maße wie sich der Druck auf die einzulegende Kupplung weiter erhöht. Dies erzeugt ein großes Trägheitsmoment, das zusätzlich zum Drehmoment der Verbrennungskraftmaschine vom Kupplungsteil aufgenommen werden muß. Dieses Drehmoment durch Trägheit erzeugt dabei einen Drehmomentenstoß, der auf den Innenraum, beispielsweise eines Fahrzeuges, weitergeleitet wird. Zur Verminderung dieses Drehmomentenstoßes sind eine Vielzahl von Möglichkeiten bekannt, eine ist beispielsweise in der DE 691 13 193 T2 (& EP-A-475 585) beschrieben. Gemäß der Offenbarung wird die Steuerung des Schaltvorganges durch stetes Überwachen der Eingangsgeschwindigkeit an der Getriebeeingangswelle und durch den Vergleich einer Veränderung am Ende der Drehmomentphase mit einem abgespeicherten Wert bereitgestellt. Vorzugsweise wird die Steuerung durch Verzögern der Zündeinstellung des Motors um eine bestimmte Zeit verbessert. Zur Realisierung wird eine adaptive Steuerungssystem zum Einstellen des Druckes in einer Vorrichtung zur Erzeugung eines Drehmomentes durch Reibung für einen Antriebsstrang bereitgestellt, welcher einen Verbrennungsmotor und ein Mehrgeschwindigkeiten-Übersetzungsgetriebe umfaßt Das System umfaßt des weiteren eine Welle für die Eingabe des Drehmomentes zwischen der Verbrennungskraftmaschine und dem Getriebe, einen ersten Reibungsmechanismus zur wenigstens teilweisen Bereitstellung eines ersten Übertragungsweges für das Drehmoment zwischen der Antriebswelle und ersten Teilen des Getriebes für die Eingabe von Drehmoment und einen zweiten Reibungsmechanismus, der zur Übertragung von Drehmoment zwischen der Antriebswelle und zweiten Teilen des Getriebes dient Das System umfaßt weiterhin eine erste und eine zweite durch Druck betätigbare Servoeinrichtung, welche, wenn sie unter Druck gesetzt wird, jeweils den ersten und den zweiten Reibungsmechanismus betätigt, wobei die Erzeugung des zweiten Übertragungsweges von Drehmoment von einer verringerten Motorgeschwindigkeit begleitet wird, eine Vorrichtung zum ständigen Überwachen der Geschwindigkeit an der Drehmomenteneingabewelle, d. h. Getriebeeingangswelle und eine Vorrichtung zum Erhöhen des Druckes der zweiten Servoeinrichtung als Antwort auf einen Befehl zur Änderung des Übersetzungsverhältnisses, welche das Lösen des ersten Reibungsmechanismus und das Betätigen des zweiten Reibungsmechanismus verlangt. Das System umfaßt des weiteren eine Vorrichtung zur Verminderung des Druckes in der Servovorrichtung als Antwort auf eine vorbestimmte erfaßte Änderung der Drehzahl der Drehmomenteneingabewelle und eine Vorrichtung zum Erhöhen des Druckes der Servoeinrichtung als Folge der Verringerung der Kupplungsfähigkeit des ersten Reibungsmechanismus während des Schaltvorganges. Der Nachteil einer derartigen Steuerung besteht im wesentlichen darin, daß die erforderliche Anpassung des Druckverlaufes sehr feinfühlig erfolgen muß und daher auch sehr aufwendig ist. Des weiteren erfolgt die Anpassung des Druckwertes immer gegenüber den objektiven Gegebenheiten an der Getriebeeingangswelle, insbesondere in Abhängigkeit von der Drehzahl an der Getriebeeingangswelle. Änderungen der Drehzahl und des Massenträgheitsmomentes der Verbrennungskraftmaschine haben daher wiederum Einfluß auf die erforderliche Anpassung des Druckverlaufes.

Der Erfindung liegt daher die Aufgabe zugrunde, ein Verfahren zur Steuerung des Gangwechsels bei hydrodynamisch-mechanischen Verbundgetrieben derart weiterzuentwickeln, daß die genannten Nachteile vermieden werden. Im einzelnen ist ein guter Schaltkomfort ohne oder mit nur geringen Momentenüberhöhungen beim Schalten hervorgerufen durch Drehzahländerungen und Massenträgheitsmomente der Verbrennungskraftmaschine zu erzielen. Der konstruktive und steuerungstechnische Aufwand soll. dabei möglichst gering gehalten werden.

Die erfindungsgemäße Lösung ist durch die Merkmale der Ansprüche 1 und 7 charakterisiert. Vorteilhafte Ausgestaltungen sind jeweils in den Unteransprüchen wiedergegeben.

Erfindungsgemäß wird zur Verbesserung der Schaltqualität während eines Gangwechsels, d. h. des Wechsels zwischen zwei Schaltstufen in einer Getriebebaueinheit, umfassend wenigstens einen Getriebezweig zur Leistungsübertragung mit einer hydrodynamischen Kupplung, welche in diesem Leistungsübertragungszweig in Reihe mit einem mechanischen Getriebeteil, umfassend die Mittel zur Realisierung wenigstens zweier Gangstufen, koppelbar ist, während des Schaltvorganges im hydrodynamisch-mechanischen Leistungsübertzragungsgetriebezweig zwischen zwei mechanischen Gangstufen der Füllungsgrad der hydrodynamischen Kupplung derart überwacht und eingestellt, daß eine, die Drehzahl des Pumpenrades der hydrodynamsichen Kupplung wenigstens mittelbar charakterisierende Größe nahezu konstant über einen bestimmten Bereich des Schaltvorganges gehalten wird. Demzufolge setzt zu Beginn des Schaltvorganges vorzugsweise eine Regelung der Drehzahl des Pumpenrades durch entsprechende Füllungssteuerung an der hydrodynamischen Kupplung ein, wobei das vor der Schaltung vorhandene Drehzahlniveau beibehalten werden soll. Als Vergleichs- bzw. Sollgröße kann auch eine, für jeden Schaltvorgang vorgebbare, fest definierbare Solldrehzahl dienen.

Mit der erfindungsgemäßen Lösung wird folgendes erzielt: Beispielsweise das Schalten zwischen einzelnen Gangstufen bei Zug-Hochschaltungen, d. h. dem Wechsel von einer ersten niederen Gangstufe in eine zweite höhere Gangstufe, würde normalerweise zu einer Drückung der Drehzahl wenigstens am Primärschaufelrad und der mit diesem koppelbaren Bauteilen, insbesondere der Antriebsmaschinenwelle, führen. Durch Regelung der Drehzahl des Pumpenrades auf einen nahezu konstanten Wert wird die hydrodynamische Kupplung weicher und läßt den erforderlichen Schlupf in der hydrodynamischen Kupplung selbst entstehen. Dadurch wird während des Schaltvorganges beim Wechsel der Leistungsübertragungseinrichtung und/oder des Verhältnisses Drehzahl-/Drehmoment im mechanischen Getriebeteil keinerlei Veränderung der Drehzahl an der Getriebeeingangswelle bzw. der mit dieser koppelbaren Antriebsmaschine erzielt. Die Schaltung selbst kann zügig ohne großen Druckaufbau erfolgen. Eine Verringerung des Schlupfes wird wieder durch die Änderung der Fahrgeschwindigkeit bzw. das zwangweise Härtermachen der hydrodynamsichen Kupplung, insbesondere durch Erhöhung der Befüllung, unter Berücksichtigung der minimal zulässigen Drehzahl der Antriebsmaschine realisiert. Die zeitliche Dauer des Regelvorganges erstreckt sich dabei vorzugsweise auf einen Bereich zwischen dem Beginn des Schaltvorganges und dem Erreichen der Synchrondrehzahl, kann jedoch auch zeitlich versetzt zum Beginn des Schaltvorganges und/oder mit Erreichen eines bestimmten Schlupfwertes, d. h. einer bestimmten Differenz zwischen den Drehzahlen von Primärschaufelrad und Sekundärschaufelrad an der hydrodynamischen Kupplung beendet werden. Vorzugsweise wird der Regelvorgang erst dann beendet, wenn der Schlupf sich auf ein minimales Maß verringert hat, insbesondere wird darunter die üblicherweise bei der hydrodynamischen Leistungsübertragung vorliegende Schlupfhöhe von zwei bis drei Prozent verstanden. Die Antriebsmaschine kann dann weiter beschleunigen, während die hydrodynamische Kupplung wieder mit maximalen Überlagerungsdruck, d. h. hohem Wirkungsgrad, arbeitet.

Die erfindungsgemäße Lösung ist generell für alle Schaltvorgänge in Getrieben geeignet, in welchen die hydrodynamische Kupplung eine nicht schräge Beschaufelung aufweist und an der Leistungsübertragung teilnimmt.

Die erfindungsgemäße Lösung ist bei schrägbeschaufelten Kupplungen vorrangig für die Verbesserung der Schaltqualität bei Zug-Hochschaltungen einsetzbar, während bei Schub-Hochschaltungen bzw. Zug-Rückschaltung und Schub-Rückschaltungen sich eine derartige Regelung in der Regel erübrigen kann. Im Schubbetrieb und bei eingeschalteter hydrodynamischer Kupplung mit Schrägbeschaufelung, d. h. bei befüllter hydrodynamischer Kupplung, kann die mit der Getriebeeingangswelle und damit dem Primärschaufelrad der hydrodynamischen Kupplung gekoppelte Antriebsmaschine nicht geschleppt werden. In diesem Fall arbeitet die hydrodynamische Kupplung bei Antrieb des Sekundärschaufelrades über die Getriebeausgangsseite im fliehenden Betrieb. Das Fahrzeug rollt nach Gaswegnahme ohne stark abzubremsen, d. h. es erfolgt auch kein Lastwechselschlag und die Antriebsmaschine bzw. der Motor läuft mit leicht erhöhter Leerlaufdrehzahl. Das Verhalten des hydrodynamischen Bauelementes entspricht dem eines hydrodynamischen Drehzahl/Drehmomentenwandlers. Die Schub-Hochschaltungen haben somit keinerlei Auswirkung auf die mit der Getriebeeingangswelle koppelbaren Antriebsmaschine und sind deswegen kaum spürbar.

In der Regel stützt sich die Antriebsmaschine bei der Leistungsübertragung im hydrodynamisch-mechanischen Leistungsübertragungszweig im Traktionsbetrieb am Sekundärschaufelrad ab, was auch für Rückschaltungen gilt, während der die Drehzahl des Sekundärschaufelrades ansteigt. Die Antriebsmaschine kann durch die einzulegende Gangstufe nicht hochgezogen werden, die hydrodynamische Kupplung arbeitet wiederum im fliehenden Betrieb, weshalb auch die Motormasse keinen negativen Einfluß auf den Schaltvorgang ausüben kann.

Für Schub-Rückschaltungen in Getriebeanordnungen mit schrägbeschaufelter hydrodynamischer Kupplung gelten in Analogie die gleichen Aussagen wie für die Schub-Hochschaltungen. Auch bei diesen wird die Drehzahl der Antriebsmaschine durch die Schaltvorgänge nicht beeinflußt.

Die erfindungsgemäße Lösung bietet den Vorteil, daß niedrigere Antriebsdrehzahlen der Antriebsmaschine durch Anpassen der Leistung der Antriebsmaschine an die geforderte Fahrleistung erzielt werden. Insgesamt stellt sich ein höherer Wirkungsgrad im Fahrzustand ein. Aufgrund der Verlagerung bzw. Kompensation des Schlupfes beim Gangwechsel in die hydrodynamische Kupplung werden die einzelnen Schaltelemente zur Realisierung der einzelnen Gangstufen wesentlich geringer beansprucht. Da keine Momentenüberhöhungen während des Schaltvorganges hervorgerufen durch Drehzahländerungen und Massenträgheitsmomente an der mit dem Getriebe gekoppelten Antriebsmaschine auftreten, verläuft der Schaltvorgang nahezu stoßfrei, was sich in einem erhöhten Schaltkomfort niederschlägt. Die Schaltdrehzahlen selbst können sehr klein gewählt werden, da die Antriebsmaschine bei der Schaltung hinsichtlich ihrer Drehzahl nicht verändert wird. Der Verlauf der Drehzahl der Antriebsmaschine beim Schalten mit in Betrieb genommener hydrodynamischer Kupplung ist stetig.

Vorrichtungsmäßig ist eine Getriebebaueinheit, umfassend einen ersten hydrodynamischen Getriebeteil mit wenigstens einem Primär- und einem Sekundärschaufelrad, die miteinander einen torusförmigen Arbeitsraum bilden und als hydrodynamische Kupplung arbeiten können und einen zweiten mechanischen Getriebeteil, welcher wenigstens Mittel zur Realisierung zweier unterschiedlicher Gangstufen umfaßt, eine Steuer- bzw. Regelvorrichtung zugeordnet. Die Steuer- bzw. Regelvorrichtung umfaßt zur Realisierung der erfindungsgemäßen Betriebsweise wenigstens zwei Eingänge und einen Ausgang. Ein erster Eingang ist dabei mit einer Einrichtung zur Erfassung bzw. Vorgabe eines Signals für das Vorliegen eines Schaltvorganges gekoppelt, während ein zweiter Eingang mit einer Einrichtung zur Erfassung wenigstens einer, die Drehzahl des Primärschaufelrades der hydrodynamischen Kupplung wenigstens mittelbar beschreibende Größe koppelbar ist. Die die Drehzahl des Primärschaufelrades der hydrodynamischen Kupplung wenigstens mittelbar beschreibenden Größe wird mit einem Sollwert, welcher vorzugsweise dem zu Beginn des Schaltwechsels erfaßbaren Wert der Drehzahl bzw. der die Drehzahl des Primärschaufelrades wenigstens mittelbar beschreibenden Größe entspricht, verglichen. Entsprechend der Abweichung zwischen dem Ist- und dem Sollwert wird eine Stellgröße Y gebildet, welche der Ansteuerung einer Einrichtung zur Änderung des Füllungsgrades der hydrodynamischen Kupplung dient. Die Änderung des Füllungsgrades der hydrodynamischen Kupplung wiederum kann über eine Steuerung oder aber Regelung erfolgen. Die Steuer- bzw. die Regelung ist dann der Drehzahlregelung für das Primärschaufelrad der hydrodynamischen Kupplung untergeordnet.

Für die Einstellung des Füllungsgrades ergeben sich im einzelnen die folgenden Möglichkeiten:
a) Steuerung des Füllungsgrades im Rahmen der Drehzahlregelung oder
b) Regelung des Füllungsgrades im Rahmen einer der Drehzahlregelung untergeordneten Füllungsgradregelung.

Zur Ausführung der Drehzahlregelung im einzelnen wird auf die Ausführungen in "Voith - Hydrodynamik in der Antriebstechnik", Krauskopf Ingenieur Digest 1987, Kapitel "Steuer- und Regelungen" verwiesen. Die Einstellung des Füllungsgrades bzw. die Realisierung der Drehzahlregelung ist jedoch nicht an ein konkretes Ausführungsbeispiel gebunden, entscheidend ist lediglich, daß eine die Drehzahl des Pumpenrades wenigstens mittelbar charakterisierende Größe während der ersten Schaltstufen auf einen bestimmten Wert eingeregelt wird und dieser Wert konstant gehalten wird.

Das Getriebe weist des weiteren über den gesamten Bereich einen guten Wirkungsgrad auf und bezüglich Schaltkomfort und Fahrverhalten sind keinerlei Rückschritte gegenüber den derzeit bekannten Getrieben zu verzeichnen. Während des Betriebszustandes "Fahren" wird das hydrodynamische Kupplungselement vorzugsweise mit maximaler Füllung betrieben, hat dabei sehr wenig Schlupf und damit einen ausgezeichneten Wirkungsgrad, der je nach Last und Drehzahl zwischen 90 und 99 % liegen kann. Diese Werte werden von keinem hydrodynamischen Wandler erreicht. Das hydrodynamische Bauelement, welches während des Anfahrvorganges als Kupplung arbeitet, kuppelt hart. Trotzdem bleibt es ein hydraulisches Übertragungselement mit all seinen Vorteilen, wie beispielsweise die Dämpfung von Schwingungen und die Minderung von Geräuschen. Bei allen darauffolgenden Schaltungen wird dann der Schlupf des hydrodynamischen Bauelementes vergrößert, das Kuppeln erfolgt weicher und erreicht Werte, welche mindestens dem Schlupf eines hydrodynamischen Wandlers entsprechen. Die Schaltung der einzelnen Gangstufen im ersten Betriebszustand kann zügig erfolgen, der zwangsweise entstehende Schlupf kann in das hydrodynamische Bauelement verlegt werden und sodann durch Steigerung der Füllung wieder verringert werden. Damit können komfortable Übergänge bei gleichzeitiger Verringerung der Belastung der Schaltelemente zur Realisierung der einzelnen Gangstufen erzeugt werden.

Auch bei plötzlich auftretenden Lastwechseln kann der Schlupf des hydrodynamischen Bauelementes ebenfalls kurzzeitig erhöht werden, so daß sich eine hydraulische weiche Anbindung ergibt, außerdem ist die Abstützung im Schubbetrieb sehr gering. Der gefürchtete Lastwechselschlag dürfte dann kein Thema sein. Hinzu kommt, daß die Kennlinie des verwendeten elastischen Dämpfers bessere Eigenschaften bei Lastwechseln besitzt. Das hydrodynamische Bauelement wird dann im Betriebszustand "Fahren" überbrückt, wenn die Schaltung der einzelnen Gangstufen keine Einbuße im Schaltkomfort mehr verursacht. Diese Funktion wird durch entsprechende Steuerung der Füll- und Entleervorgänge gewährleistet.

Die hydrodynamische Kupplung kann auch weitere Aufgaben erfüllen, beispielsweise erfolgt im Bremsbetrieb eine Nutzung der hydrodynamischen Kupplung als Retarder.

Die erfindungsgemäße Lösung wird nachfolgend anhand von Figuren erläutert.

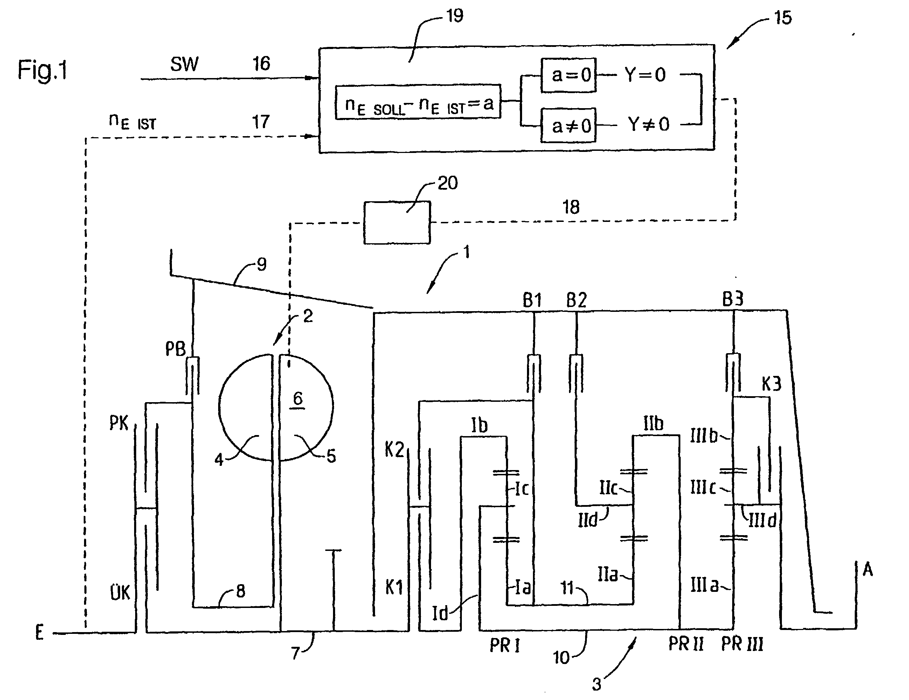

Die Figur 1 verdeutlicht schematisch anhand einer vereinfachten Darstellung eines Axialschnittes einer beispielhaften Getriebebaueinheit 1, umfassend einen ersten hydraulischen Getriebeteil 2 in Form einer hydrodynamischen Kupplung und einen zweiten mechanischen Getriebeteil 3, die Funktionsweise des erfindungsgemäßen Verfahrens. Der erste hydraulische Getriebeteil 2 umfaßt dazu wenigstens zwei Schaufelräder - ein erstes Schaufelrad und ein zweites Schaufelrad. Das erste Schaufelrad wird dabei als Primärschaufelrad PR 4 und das zweite Schaufelrad als Sekundärschaufelrad SR 5 bezeichnet. Das Pimärschaufelrad 4 und das Sekundärschaufelrad 5 bilden miteinander wenigstens einen torusförmigen Arbeitsraum 6, welcher mit Betriebsmittel befüllbar ist. Zu diesem Zweck ist dem torusförmigen Arbeitsraum 6 eine, hier im einzelnen nicht dargestellte Betriebsmittelversorgungseinheit zugeordnet. Die Getriebebaueinheit 1 ist derart aufgebaut, daß der hydrodynamische Getriebeteil 2 und der mechanische Getriebeteil 3 bezüglich der Leistungsübertragung von der Getriebeeingangswelle E zur Getriebeausgangswelle A in Reihe schaltbar ist. Die mögliche Kopplung von hydrodynamischen Getriebeteil 2 und mechanischen Getriebeteil 3 in Reihe zur Leistungsübertragung zwischen der Getriebeeingangswelle und der Getriebeausgangswelle A beschreibt einen Getriebezweig zur Leistungsübertragung zwischen der Getriebeeingangswelle E und der Getriebeausgangswelle A. Ein weiterer zweiter Getriebezweig wird dabei durch den Leistungsübertragungs weg von der Getriebeeingangswelle E zur Getriebeausgangswelle A unter Umgehung des hydrodynamischen Getriebeteils 2 beschrieben. Die Aussagen bezüglich des Verfahrens beziehen sich im nachfolgenden auf eine Betriebsweise, welche die Leistungsübertragung zwischen der Getriebeeingangswelle und der Getriebeausgangswelle hydraulisch-mechanisch ermöglicht, d. h. im ersten Getriebezweig über die hydrodynamische Kupplung 2 auf den mechanischen Getriebeteil 3. Die konstruktive Ausführung der beispielhaft dargestellten Getriebebaueinheit wird nachfolgend wie folgt beschrieben: Das Sekundärschaufelrad 5 ist über eine Verbindungswelle 7 ständig drehfest mit dem mechanischen Getriebeteil 3 verbunden. Die Verbindungswelle 7 ist über eine sogenannte Durchkupplung, welche auch als Überbrückungskupplung ÜK bezeichnet wird, mit der Getriebeeingangswelle E koppelbar. Über diese Kopplung ist damit auch das Sekundärschaufelrad 5 mit der Getriebeeingangswelle E verbindbar. Das Primärschaufelrad 4 ist mittels einer sogenannten Primärschaufelradkupplung PK mit der Getriebeeingangswelle E koppelbar. Das Primärschaufelrad 4 ist vorzugsweise drehfest auf einer Verbindungswelle 8 angeordnet, wobei die Verbindungswelle 8 mit der Getriebeeingangswelle E durch die Primärschaufelradkupplung PK verbindbar ist. Der Verbindungswelle 8 ist ein Bremselement, welches hier als Primärschaufelradbremse PB bezeichnet wird, zugeordnet. Diese Primärschaufelradbremse PB ist gesteltfest an einem ruhenden Getriebeteil, vorzugsweise am hier angedeuteten Getriebegehäuse 9 befestigt.

Das Sekundärschaufelrad 5 ist über die Verbindungswelle 7 mit dem zweiten mechanischen Getriebeteil 3 koppelbar. Der zweite mechanische Getriebeteil 3 umfaßt im dargestellten Fall drei Planetenradsätze, einen ersten Planetenradsatz PRI, einen zweiten Planetenradsatz PRII und einen dritten Planetenradsatz PRIII. Die einzelnen Planetenradsätze umfassen jeweils wenigstens ein erstes Sonnenrad - für den ersten Planetenradsatz PRI mit la, für den zweiten Planetenradsatz PRII mit IIa und für den dritten Planetenradsatz PRIII mit IIIa bezeichnet, ein Hohlrad, Planetenräder und einen Steg. Die Hohlräder der einzelnen Planetenradsätze sind hier für den ersten Planetenradsatz PRI mit Ib, für den zweiten Planetenradsatz PRII mit IIb und für den dritten Planetenradsatz PRIII mit IIIb bezeichnet. Mit dieser Getriebebaueinheit können im Betriebszustand Fahren beispielsweise sechs Gangstufen realisiert werden, wobei wenigstens zwei Gangstufen frei von der Betätigung der Überbrückungskupplung sind. Im ersten Gang des ersten Betriebszustandes, dem sogenannten Anfahrgang, ist die Primärschaufelradkupplung PK betätigt und verbindet damit die Getriebeeingangswelle E über die Verbindungswelle 8 mit dem Primärschaufelrad 4. Die Verbindung zwischen dem hydraulischen Getriebeteil 2 und dem mechanischen Getriebeteil 3 wird über das erste Kupplungselement K1 realisiert. Desweiteren sind das zweite und dritte Bremselement B2 und B3 betätigt. Die hydraulische Baueinheit 2, insbesondere der torusförmige Arbeitsraum 6 ist in diesem Zustand mit Betriebsmittel befüllt. Der Kraftfluß beziehungsweise die Leistungsübertragung erfordert dabei über die mit einer hier nicht dargestellten Antriebsmaschine wenigstens mittelbar koppelbare Getriebeeingangswelle E, die Primärschaufelradkupplung PK, das Primärschaufelrad 4, das Sekundärschaufelrad 5 über das erste Kupplungselement K1, den ersten Planetenradsatz PRI, insbesondere das Hohlrad Ib des ersten Planetenradsatzes auf den Steg IIId des dritten Planetenradsatzes und damit die Getriebeausgangswelle A, welche wenigstens mittelbar mit einer anzutreibenden Einrichtung, beispielsweise den Rädern eines Fahrzeuges in Triebverbindung bringbar ist.

Das hydraulische Getriebeteil 2 arbeitet während des Anfahrvorganges als hydrodynamische Kupplung. Beim Übergang in die zweite Gangstufe bleiben das erste Kupplungselement K1 sowie das dritte Bremselement B3 betätigt, des weiteren die Primärschaufelradkupplung PK. Das zweite Bremselement B2 wird gelöst und dafür das erste Bremselement B1 betätigt. Da auch wenigstens in der zweiten Gangstufe die Überbrückungskupplung ÜK nicht betätigt ist, übernimmt das hydraulische Getriebeelement 2 die Funktion der hydrodynamischen Kupplung innerhalb der zweiten Gangstufe. Vorzugsweise ist auch noch die dritte Gangstufe 3 frei der Betätigung der Überbrückungskupplung ÜK. Betätigt sind jedoch die Primärschaufelradkupplung PK, das erste Kupplungselement K1 sowie das zweite Kupplungselement K2 und das dritte Bremselement B3, Alle anderen Lastschaltelemente befinden sich außer Eingriff. Der Kraftfluß erfolgt somit über die Getriebeeingangswelle E, das hydraulische Getriebeteil 2, die Verbindungswelle 7 über das erste Kupplungselement K1 zum ersten Planetenradsatz PRI, insbesondere zum Hohlrad Ib des ersten Planetenradsatzes PRI. Ein weiterer Leistungsanteil wird über das zweite Kupplungselement K2 auf das Sonnenrad la des ersten Planetenradsatzes PRI übertragen. Die wiederum am Steg Id des ersten Planetenradsätze PRI zusammengeführten Leistungsanteile werden über den Steg IIId des dritten Planetenradsatzes PRIII auf die Getriebeausgangswelle A übertragen.

In der vierten Gangstufe sind das erste Kupplungselement K1, das dritte Kupplungselement K3, die Überbrückungskupplung ÜK, die Primärschaufelradkupplung PK sowie das zweite Bremselement B2 betätigt. Alle anderen Lastschaltelemente sind außer Eingriff. Mittels des zweiten Bremselementes B2 wird der Steg IId des zweiten Planetenradsatzes PRII festgestellt. Das Hohlrad IIId des dritten Planetenradsatzes PRIII ist mit dem Steg des dritten Planetenradsatzes IIId drehfest verbunden. Die Leistungsübertragung erfolgt damit von der Getriebeeingangswelle E über die Überbrückungskupplung ÜK, die Verbindungswelle 7, das erste Kupplungselement K1 zum Hohlrad Ib des ersten Planetenradsatzes PRI, über den zweiten Planetenradsatz PRII, die Verbindungswelle 10 zu den Planetenrädem IIIc des dritten Planetenradsatzes PRIII, welche den mit dem Hohlrad IIIb gekoppelten Steg IIId des dritten Planetenradsatzes PRIII zur Getriebeausgangswelle A antreiben.

In der fünften Gangstufe werden lediglich das zweite Bremselement B2 gelöst und das erste Bremselement B1 betätigt. Dies bedeutet, daß die Verbindung zwischen dem ersten Planetenradsatz PRI und dem zweiten Planetenradsatz PRII, insbesondere die Verbindungswelle 11 festgestellt ist. Die Sonnenräder Ia und IIa der beiden Planetenradsätze PRI und PRII stehen somit still. Die Kraftübertragung selbst erfolgt wieder über die Eingangswelle E, die Überbrückungskupplung ÜK, die Verbindungswelle 7, das erste Kupplungselement K1, das Hohlrad Ib des ersten Planetenradsatzes PRI und von da über den Steg Id des ersten Planetenradsatzes PRI auf den Stege IIId des dritten Planetenradsatzes PRIII und damit der Getriebeausgangswelle A.

Die sechste Gangstufe unterscheidet sich von der fünften Gangstufe dadurch, daß alle drei Kupplungselemente K1, K2 sowie K3 betätigt, während alle Bremselemente gelöst sind.

Die Schaltqualität beim Wechsel von einer Gangstufe in die nächste Gangstufe hängt im wesentlichen von der Betätigung der einzelnen Schaltelemente K1 bis K3, B1 bis B3 im mechanischen Getriebeteil ab. Im einzelnen ist dabei die zeitliche Abfolge der Betätigung des "kommenden Schaltelementes" und des Lösens des sogenannten "gehenden Schaltelementes" sowie die Größe der Betätigungskräfte entscheidend. Unter den "kommenden Schaltelementen" werden dabei die Schaltelemente bzw. die Bestandteile der Schaltelemente verstanden, welche beim Gangwechsel zwischen zwei verschiedenen Gangstufen einzulegen sind, d. h. die Schaltelemente, welche in der folgenden einzulegenden Gangstufe betätigt sind. Die "gehenden Schaltelemente" sind die beim Befehl zum gewünschten Gangwechsel noch im alten Gang eingelegten bzw. betätigten Schaltelemente, welche beim Gangwechsel zu lösen sind.

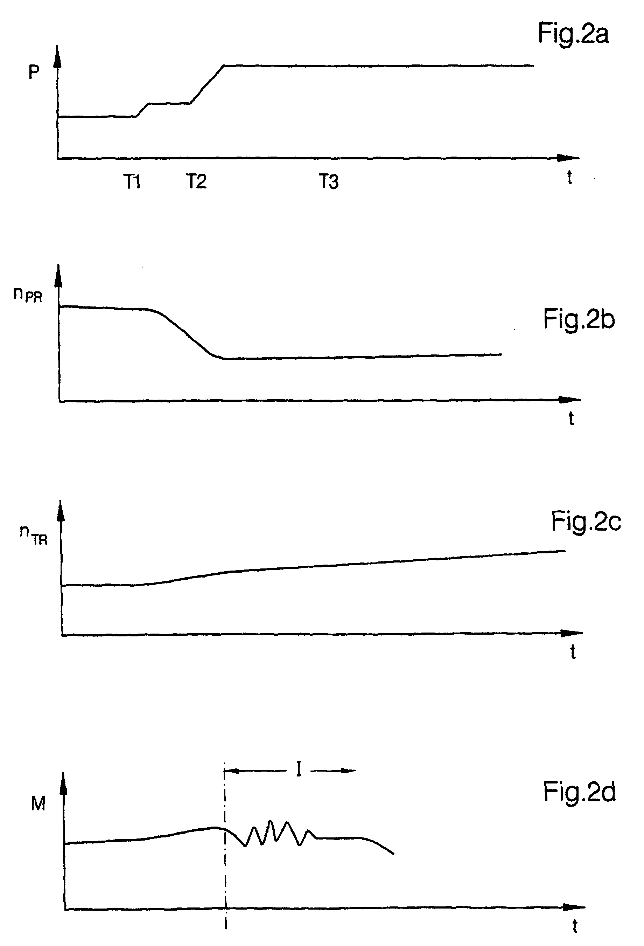

Die Figur 2 verdeutlicht dazu anhand von verschiedenen Diagrammen beispielhaft in schematischer bzw. vereinfachter Darstellung die Drehzahl/Drehmomentenverläufe, welche sich für das in Figur 1 beschriebene Getriebe ohne das erfindungsgemäße Verfahren unter Umständen einstellen können. Im einzelnen sind dazu die Zusammenhänge zwischen den an den kommenden Schaltelementen angelegten Drücken über die Zeit, die sich einstellenden Drehmomentenänderungen sowie die Drehzahländerungen auf der Antriebsseite, d. h. auf Seiten der Getriebeeingangswelle sowie der Abtriebsseite beispielhaft wiedergegeben. Daraus wird ersichtlich, daß im Bereich I erhebliche Momentenüberhöhungen auftreten können, welche entsprechend dem bisher bekannten Stand der Technik durch Anpassung der an den kommenden und/oder gehenden Schaltelementen anliegenden Druckverläufe bzw. der adaptiven Anpassung dieser versucht wurden zu reduzieren.

Erfindungsgemäß ist zur Lösung der Aufgabe und Beseitigung der oben genannten Nachteile der Getriebebaueinheit 1 eine Steuer- bzw. Regelvorrichtung 15 zugeordnet, welche wenigstens zwei Eingänge, einen ersten Eingang 16 und einen zweiten Eingang 17 und einen ersten Ausgang 18 aufweist. Die Steuer- bzw. Regelvorrichtung 15 dient dabei der Schlupfkompensation beim Gangwechsel im mechanischen Getriebeteil 3. Im einzelnen ist dabei der Schlupf zwischen den einzelnen Kupplungs- bzw. Bremselemententeilen gemeint, welche jeweils mit der An- oder Abtriebsseite gekoppelt sind und diese miteinander zum Zwecke der Drehmomentenübertragung verbinden. Unter Antriebsseite wird dabei der Bereich der Getriebebaueinheit 1 verstanden, in welchem im Traktionsbetrieb die Leistungsübertragung von der Getriebeeingangswelle in Richtung der Getriebeausgangswelle bis zu einem ersten Element des beim Gangwechsel "kommenden" Schaltelementes beschrieben wird. Abtriebsseitig ist das mit der Getriebeausgangswelle A wenigstens mittelbar gekoppelte zweite Element des "kommenden" Schaltelementes. Insbesondere bei den Zug-Hochschaltungen findet beim Gangwechsel von einem ersten Gang in den nächsthöheren Gang, beispielsweise vom ersten in den zweiten Gang, eine Drückung der Drehzahl an der Getriebeeingangswelle E und damit der mit dieser koppelbaren Antriebsmaschine, beispielsweise Verbrennungskraftmaschine statt. Diese Drehzahldrückung wird erfindungsgemäß über die hydrodynamische Kupplung 2 kompensiert. Dies gilt jedoch lediglich hinsichtlich der Hochschaltvorgänge, d. h. von einem ersten niedrigen Gang in einen zweiten höheren Gang, bei welchem die Leistungsübertragung wenigstens teilweise über die hydrodynamische Kupplung 2 erfolgt. Die Schlupfkompensation erfolgt durch Änderung des Füllungsgrades im Arbeitsraum 6 der hydrodynamischen Kupplung. Die Füllungsgradänderung wird dabei mit dem Ziel vorgenommen, eine im wesentlichen konstante Drehzahl des Pumpenrades 4 und damit wenigstens mittelbar der Drehzahl der mit der Getriebebaueinheit 1 koppelbaren Antriebsmaschine zur realisieren. Die hydrodynamische Kupplung 2 wird somit zur Drehzahlregelung genutzt. Die Füllungsgradänderung selbst kann dabei im Rahmen einer Steuerung und/oder einer der Drehzahlregelung untergeordneten Regelung erfolgen. Zur Umsetzung der Drehzahlregelung wird ein Istwert einer, die Drehzahl des Primärschaufelrades 4 der hydrodynamischen Kupplung 2 wenigstens mittelbar beschreibenden Größe erfaßt und dem ersten Eingang der Steuer- bzw. Regelvorrichtung 15 zugeführt. Der erste Eingang 17 ist dazu mit einer Einrichtung zur Erfassung der die Drehzahl des Pumpenrades 4 wenigstens mittelbar beschreibenden Größe koppelbar. Da die Drehzahtregelung entsprechend dem erfindungsgemäßen Verfahren beim Gangwechsel zur Schlupfkompensation vorgenommen wird, ist der zweite Eingang 16 der Steuer- bzw. Regelvorrichtung 15 mit einer Einrichtung zur Vorgabe und/oder Erfassung eines Signales für das Vorliegen eines Gangwechsels SW gekoppelt. Im vorliegenden Fall wird als die zur Beschreibung der Drehzahl des Pumpenrades verwendete Größe die Drehzahl der Getriebeeingangswelle E ermittelt. Der lstwert n_{EIST} wird in der Steuer- bzw. Regelvorrichtung 15 einem Vergleich mit einem Sollwert n_{ESOLL} unterzogen, wobei der Sollwert n_{ESOLL} ein vorgegebener Sollwert zur Beschreibung der die Drehzahl des Pumpenrades 4 wenigstens mittelbar charakterisierenden Größe, ein fest definierter Wert für unterschiedliche Betriebsbedingungen und/oder ein setzbarer Sollwert ist. Im letztgenannten Fall kann beispielsweise der Sollwert von einem zu Beginn des Schaltvorganges bzw. beim Vorliegen eines Signales für einen gewünschten Gangwechsel an der Getriebeeingangswelle E und/oder der Pumpenradwelle 8 des Pumpenrades der hydrodynamischen Kupplung 2 anliegende Drehzahl bzw. eine die charakterisierende Größe gesetzt werden. Der Vergleich wird in einem Vergleicher 19 vorgenommen, wobei wenigstens hinsichtlich der beiden Fälle unterschieden wird, daß die Differenz zwischen dem Soll- und dem Istwert Null beträgt oder aber ungleich Null ist. Lediglich im letztgenannten Fall wird eine Stellgröße am Ausgang 18 der Steuer- bzw. Vorrichtung 15 ausgegeben, welche an einer Einrichtung zur wenigstens mittelbaren Beeinflussung des Füllungsgrades im Arbeitsraum 6 der hydrodynamischen Kupplung 2 wirksam wird. Diese Einrichtung ist hier mit 20 bezeichnet und wirkt sozusagen als Stellglied.

Für die Einstellung des Füllungsgrades ergeben sich im einzelnen die folgenden Möglichkeiten:
a) Steuerung des Füllungsgrades im Rahmen der Drehzahlregelung oder
b) Regelung des Füllungsgrades im Rahmen einer der Drehzahlregelung untergeordneten Füllungsgradregelung.

Zur Ausführung der Drehzahlregelung im einzelnen wird auf die Ausführungen in "Voith - Hydrodynamik in der Antriebstechnik", Krauskopf Ingenieur Digest 1987, Kapitel "Steuer- und Regelungen" verwiesen. Diese Aussagen werden hiermit voll umfänglich in den Offenbarungsgehalt der vorliegenden Anmeldung mit einbezogen. Die Einstellung des Füllungsgrades bzw. die Realisierung der Drehzahlregelung ist jedoch nicht an ein konkretes Ausführungsbeispiel gebunden, entscheidend ist lediglich, daß eine die Drehzahl des Pumpenrades wenigstens mittelbar charakterisierende Größe während der ersten Schaltstufen auf einen bestimmten Wert eingeregelt wird und dieser Wert konstant gehalten wird. Die Ausführung der Getriebebaueinheit entsprechend der Figur 1 stellt somit lediglich eine Beispielvariante dar.

Die Steuer- und Regelvorrichtung 15, welche der Realisierung der Füllungsgradänderung dient, kann des weiteren derart ausgeführt sein, daß zusätzliche Elemente, insbesondere die Schaltelemente im mechanischen Getriebeteil 3 angesteuert werden. Vorzugsweise ist die Steuer- bzw. Regelvorrichtung 15 Bestandteil einer übergeordneten Steuer- bzw. Regelung. Vorzugsweise handelt es sich beim Einsatz in Fahrzeugen bei der übergeordneten Steuer- bzw. Regelung um die zentrale Fahrsteuerung, welche der Ansteuerung der unterschiedlichsten Komponenten im Antriebsstrang dient.

Entsprechend dem Vorliegen der einzelnen Eingangsgrößen an der Steuer-bwz. Regelvorrichtung 15 setzt vorzugsweise mit Beginn des Schaltvorganges eine Regelung der Drehzahl des Pumpenrades durch entsprechende Füllungssteuerung der hydrodynamischen Kupplung ein, wobei das vor der Schaltung vorhandene Drehzahlniveau beibehalten werden soll. Das Schalten der Gangstufen würde normalerweise zu einer Drückung der Drehzahl von Pumpenrad und des mit der Getriebeeingangswelle koppelbaren Motors führen. Durch den Regelvorgang wird die hydrodynamische Kupplung jedoch weicher und läßt den erforderlichen Schlupf in der hydrodynamischen Kupplung entstehen. Im einzelnen erfolgt z. B. bei Zug-Hochschaltungen zur Anpassung bzw. Kompensation des Schlupfes eine Füllungsgradänderung in Richtung Verringerung des Füllungsgrades. Die Füllungsgradänderung wird dadurch durch die Größe des Schlupfes bestimmt.

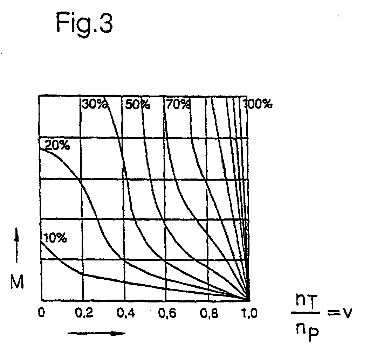

Die Figur 3 verdeutlicht anhand eines Diagrammes dabei die Abhängigkeit zwischen Füllungsgrad und Schlupf, welcher durch die Größe des Verhältnisses der Drehzahlen von Pumpenrad und Turbinenrad bzw. Primärschaufelrad und Sekundärschaufelrad der hydrodynamischen Kupplung beschrieben werden kann. Damit verursacht der Schaltvorgang keine Veränderung der Motordrehzahl. Die Schaltung der Gangstufen kann zügig ohne großen Druckaufbau erfolgen. Die Verringerung des Schlupfes geschieht durch Änderung der Fahrzeuggeschwindigkeiten bzw. durch das zwangweise Härtermachen der hydrodynamischen Kupplung unter Berücksichtigung der minimal zulässigen Motordrehzahl. Erst wenn der Schlupf sich auf ein minimales Maß verrringert hat, wird die Drehzahlregelung außer Kraft gesetzt und die mit der Getriebeeingangswelle E koppelbare Antriebsmaschine kann weiter beschleunigen, d. h. die hydrodynamische Kupplung arbeitet dann wieder mit maximalem Überlagerungsdruck bzw. mit hohem Wirkungsgrad.

Die erfindungsgemäße Lösung ist bei mechanisch-hydrodynamischen Verbundgetrieben mit schrägbeschaufelter hydrodynamischer Kupplung hauptsächlich für die Realisierung von Zug-Hochschaltungen relevant. Im Schubbetrieb bzw. auch bei Zug-Rückschaltungen ist ein derartiges Verhalten bei dieser Art hydrodynamischer Kupplung in der Regel nicht erforderlich. Ansonsten, d. h. bei Kupplungen, deren Beschaufelung nicht schräg ausgeführt ist, ist die erfindungsgemäße Lösung für alle Schaltvorgänge relevant.

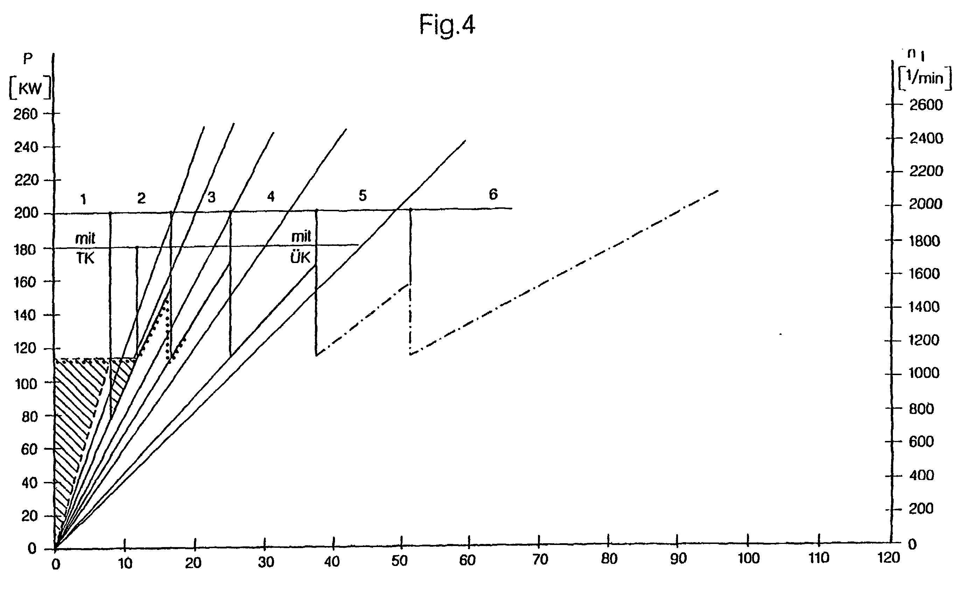

Die Figur 4 verdeutlicht in vereinfachter und beispielhafter Darstellung in einem Diagramm die Motorleistung über der Beschleunigung. Die strichpunktierte Kennlinie stellt dabei das Verhalten in einer konventionellen Getriebebaueinheit mit einer hydrodynamischen Kupplung und einem mechanischen Getriebeteil dar. Der schraffierte Bereich I ist der Betriebsbereich, welcher sich durch die Betätigung der hydrodynamischen Kupplung, d. h. der Füllung und der Leistungsübertragung über das hydrodynamische Getriebeelement auszeichnet. Die lediglich punktierte Linie beschreibt die Kennlinie für die Getriebebaueinheit, wie sie sich beim erfindungsgemäß gestalteten Verfahren einstellt. Daraus wird ersichtlich, daß mit konstanter Drehzahl während des Betriebes der hydrodynamischen Kupplung gearbeitet wird und die Differenz zwischen den beiden Kennlinien den Verlustleistungsanteil darstellt, welcher durch das erfindungsgemäße Verfahren ausgeglichen werden kann.

Die Darstellung verdeutlicht eine Getriebeausführung, bei welcher die hydrodynamische Kupplung im ersten und zweiten Gang an der Leistungsübertragung beteiligt ist. Andere Ausführungen sind jedoch ebenfalls denkbar.

Die erfindungsgemäße Lösung kann für jegliche Getriebebaueinheit, umfassend einen hydrodynamischen Getriebeteil und einen mechanischen Getriebeteil, wobei der hydrodynamische Getriebeteil als hydrodynamische Kupplung ausgeführt ist, und bei Leistungsübertragung über die hydrodynamische Kupplung beim Gangwechsel von einem beliebigen ersten Gang in einen beliebigen zweiten Gang verwendet werden. Dabei ist es unerheblich, ob den einzelnen Getriebekomponenten weitere Aufgaben zugeordnet werden, wie beispielsweise dem hydrodynamischen Getriebeteil die Funktion der hydrodynamischen Kupplung sowie des hydroynamischen Retarders, wie konkret in der nicht veröffentlichten deutschen Anmeldung Nr. 297 00 605 beschrieben.

## Patentansprüche

1. Verfahren zur Verbesserung der Schaltqualität beim Gangwechsel in einer Getriebebaueinheit, umfassend wenigstens einen Getriebezweig zur Leistungsübertragung über eine hydrodynamische Kupplung (2), welche in Reihe mit einem mechanischen Getriebeteil (3), umfassend Mittel zur Realisierung wenigstens zweier Gangstufen, koppelbar ist; **gekennzeichnet durch** die folgenden Merkmale:
bei Leistungsübertragung über die hydrodynamische Kupplung (2) während eines Schaltvorganges zwischen zwei mechanischen Gangstufen wird der Füllungsgrad der hydrodynamischen Kupplung (2) derart verändert, daß eine, die Drehzahl des Primärschaufelrades (4) der hydrodynamischen Kupplung (2) wenigstens mittelbar charakterisierende Größe im wesentlichen konstant über einen bestimmten Bereich des Schaltvorganges gehalten wird.

2. Verfahren nach Anspruch 1, **dadurch gekennzeichnet, daß** die Drehzahl des Primärschaufelrades geregelt wird.

3. Verfahren nach Anspruch 1oder 2, **dadurch gekennzeichnet, daß** der Bereich, in welchem die die Drehzahl des Primärschaufelrades (4) wenigstens mittelbar charakterisierende Größe konstant gehalten wird, durch die Zeitspanne zwischen dem Beginn des Schaltvorganges und dem Erreichen der Synchrondrehzahl beschrieben wird.

4. Verfahren nach einem der Ansprüche 1oder 2, **dadurch gekennzeichnet, daß** der Bereich, in welchem die die Drehzahl des Primärschaufelrades (4) wenigstens mittelbar charakterisierende Größe konstant gehalten wird, durch die Zeitspanne zwischen dem Beginn des Schaltvorganges und einem Zeitpunkt, welcher vor Erreichen der Synchrondrehzahl liegt, beschrieben wird.

5. Verfahren nach einem der Ansprüche 1oder 2, **dadurch gekennzeichnet, daß** eine Regelung der der Drehzahl des Primärschaufelrades (4) wenigstens mittelbar beschreibenden Größe bei Vorliegen eines Schlupfes minimaler Größe außer Betrieb genommen wird.

6. Verfahren nach einem der Ansprüche 1 bis 5, **dadurch gekennzeichnet, daß** der Füllungsgrad zur Regelung der die Drehzahl des Primärschaufelrades (4) wenigstens mittelbar beschreibenden Größe gesteuert wird.

7. Verfahren nach einem der Ansprüche 1 bis 6, **dadurch gekennzeichnet, daß** der Füllungsgrad zur Regelung der die Drehzahl des Primärschaufelrades (4) der hydrodynamischen Kupplung (2) wenigstens mittelbar beschreibenden Größe eingeregelt wird.

8. Steuerung zur Verbesserung der Schaltqualität eines hydrodynamisch-mechanischen Verbundgetriebes (1) mit wenigstens einem hydrodynamischen Getriebeteil, umfassend eine hydrodynamische Kupplung (2), und einem mechanischen Getriebeteil (3), welche wenigstens einen Getriebezweig zur Leistungsübertragung über die hydrodynamische Kupplung (2), welche in Reihe mit dem mechanischen Getriebeteil (3), umfassend Mittel zur Realisierung wenigstens zweier Gangstufen, koppelbar ist;
**gekennzeichnet durch** die folgenden Merkmale:
es sind Mittel zur Drehzahlregelung des Pumpenschaufelrades (4) der hydrodynamischen Kupplung (2) während des Schaltvorganges vorgesehen.

9. Steuerung (15) nach Anspruch 8, **gekennzeichnet durch** die folgenden Merkmale:
9.1 die Mittel umfassen eine Steuereinrichtung mit wenigstens einem ersten Eingang (17) und einem zweiten Eingang (15) und mit einem Ausgang (18);
9.2 der erste Eingang (17) ist mit einer Erfassungseinrichtung für das Vorliegen eines Signales zum Gangwechsel koppelbar;
9.3 der zweite Eingang (16) ist mit einem Signal zur Ermittlung oder Vorgabe wenigstens einer, die Drehzahl des Pumpenschaufelrades (4) wenigstens mittelbar beschreibenden Größe, eines Istwertes, koppelbar;
9.4 der Ausgang (18) ist mit einer Einrichtung zur Beeinflussung des Füllungsgrades der hydrodynamischen Kupplung koppelbar;
9.5 es ist eine Vergleichseinrichtung (19) vorgesehen, welche den Istwert der die Drehzahl des Pumpenschaufelrades (4) wenigstens mittelbar beschreibenden Größe mit einem Sollwert vergleicht und bei Abweichung eine Stellgröße am Ausgang (18) ausgibt.

10. Steuerung nach Anspruch 9, **dadurch gekennzeichnet, daß** die Einrichtung ein Stellglied zur Abstimmung des Zulaufs zum Arbeitsraum der hydrodynamischen Kupplung bei konstanter Auslaßöffnung der hydrodynamischen Kupplung umfaßt.

11. Steuerung nach Anspruch 9, **dadurch gekennzeichnet, daß** die Einrichtung ein Stellglied zur Entnahme von Betriebsmittel aus dem Arbeitskreislauf der hydrodynamischen Kupplung umfaßt.

12. Steuerung nach einem der Ansprüche 9 bis 11, **dadurch gekennzeichnet, daß** die Einrichtung eine Regelvorrichtung, deren Eingangsgröße eine, die Füllungsgradänderung wenigstens mittelbar beschreibende Größe bildet und deren Ausgangsgröße eine Stellgröße zur Ansteuerung des Stellgliedes der hydrodynamischen Kupplung ist, umfaßt.

## Claims

1. Process for improving the shift quality during gear changes in a gearing unit, comprising at least one gearing branch for power transmission via a hydrodynamic coupling (2) which can be coupled in series to a mechanical gearing part (3) comprising means for carrying out at least two gear stages, **characterised by** the following features: upon power transmission via the hydrodynamic coupling (2) during a shift between two mechanical gear stages, the filling degree of the hydrodynamic coupling (2) is changed in such a way that a variable at least indirectly characterising the speed of the primary bucket wheel (4) of the hydrodynamic coupling (2) is kept substantially constant over a certain range of the shift.

2. Process according to claim 1, **characterised in that** the speed of the primary bucket wheel is controlled.

3. Process according to claim 1 or 2, **characterised in that** the range in which the variable at least indirectly characterising the speed of the primary bucket wheel (4) is kept constant, is described by the interval between the start of the shift and attainment of the synchronous speed.

4. Process according to any one of claims 1 or 2, **characterised in that** the range in which the variable at least indirectly characterising the speed of the primary bucket wheel (4) is kept constant is described by the interval between the start of the shift and an instant before attainment of the synchronous speed.

5. Process according to any one of claims 1 or 2, **characterised in that** a control of the variable at least indirectly describing the speed of the primary bucket wheel (4) is stopped in the event of a slippage of minimum size.

6. Process according to any one of claims 1 to 5, **characterised in that** the filling degree to control the variable at least indirectly describing the speed of the primary bucket wheel (4) is controlled.

7. Process according to any one of claims 1 to 6, **characterised in that** the filling degree for controlling the variable at least indirectly describing the speed of the primary bucket wheel (4) of the hydrodynamic coupling (2) is adjusted.

8. Control for improving the shift quality of a hydrodynamic-mechanical compound gearing (1) with at least one hydrodynamic gearing part, comprising a hydrodynamic coupling (2) and a mechanical gearing part (3) which comprises at least one gearing branch for power transmission via the hydrodynamic coupling (2) which can be coupled in series to the mechanical gearing part (3) comprising means for carrying out at least two gear stages, **characterised by** the following features: means for controlling the speed of the pump bucket wheel (4) of the hydrodynamic coupling (2) during the shift are provided.

9. Control (15) according to claim 8, **characterised by** the following features:
9.1. The means comprise a control device with at least one first input (17) and a second input (15) and with an output (18);
9.2. The first input (17) can be connected to a protecting device for the presence of a signal for the gear change;
9.3. The second input (16) can be connected to a signal for determining or inputting at least one of the variables of an actual value at least indirectly describing the speed of the pump bucket wheel (4);
9.4. The exit (18) can be coupled to a device to influence the filling degree of the hydrodynamic coupling;
9.5. A comparator (19) is provided which compares the actual value of the variable at least indirectly describing the speed of the pump bucket wheel (4) with a desired value and in the event of a difference emits a correcting variable at the exit (18).

10. Control according to claim 9, **characterised in that** the device comprises an actuator for adapting the admission to the working area of the hydrodynamic coupling when the outlet of the hydrodynamic coupling is constantly open.

11. Control according to claim 9, **characterised in that** the device comprises an actuator to remove operating material from the operating circuit of the hydrodynamic coupling.

12. Control according to any one of claims 9 to 11, **characterised in that** the device comprises a control device, the input variable of which forms a variable at least indirectly describing the change in filling degree and the output variable of which is a correcting variable to control the actuator of the hydrodynamic coupling.

## Revendications

1. Procédé pour améliorer la qualité de passage des vitesses lors du changement de vitesses dans un engrenage comprenant au moins un trajet pour la transmission de puissance par un accouplement hydrodynamique (2), lequel accouplement peut être couplé en série avec une pièce mécanique de l'engrenage (3) comportant des moyens pour réaliser au moins deux vitesses ; **caractérisé par** les caractéristiques suivantes :
Si la puissance est transmise pendant l'opération de changement entre deux vitesses par un accouplement hydrodynamique (2), le taux de remplissage de l'accouplement hydrodynamique est modifié de sorte qu'une grandeur, qui caractérise au moins indirectement la vitesse de rotation de la roue à aubes primaire (4) de l'accouplement hydrodynamique (2), est maintenue essentiellement de manière constante sur une zone déterminée de l'opération de changement de vitesses.

2. Procédé selon la revendication 1, **caractérisé en ce que** la vitesse de rotation de la roue primaire à aubes est commandée.

3. Procédé selon la revendication 1 ou 2, **caractérisé en ce que** la zone dans laquelle la grandeur, qui caractérise au moins indirectement la vitesse de rotation de la roue primaire à aubes, est maintenue constante, lequel procédé est décrit par la période entre le début de changement de vitesses et l'obtention de la vitesse de rotation synchrone.

4. Procédé selon la revendication 1 ou 2, **caractérisé en ce que** la zone dans laquelle la grandeur, qui caractérise au moins indirectement la vitesse de rotation de la roue primaire à aubes, est maintenue constante, lequel procédé est décrit par la période entre le début de la procédure de changement de vitesses et l'instant qui se trouve avant l'obtention de la vitesse de rotation synchrone.

5. Procédé selon la revendication 1 ou 2 ,**caractérisé en ce qu'** une commande de la grandeur qui décrit au moins indirectement la vitesse de rotation de la roue primaire à aubes (4) est mis hors service en présence d'un glissement de grandeur minimale.

6. Procédé selon une des revendications 1 à 5 **caractérisé en ce que** le taux de remplissage destiné à régler la grandeur qui décrit au moins indirectement la vitesse de rotation de la roue primaire à aubes (4) est commandé.

7. Procédé selon une des revendications 1 à 5 **caractérisé en ce que** le taux de remplissage destiné à régler la grandeur qui décrit au moins indirectement la vitesse de rotation de la roue primaire à aubes (4) de l'accouplement hydrodynamique (2) est commandé.

8. Commande pour améliorer la qualité de passage des vitesses d'un engrenage mécanique combiné (1) avec au moins une pièce hydrodynamique d'engrenage, comportant un accouplement hydrodynamique (2), et avec une pièce mécanique d'engrenage (3) ; laquelle commande comprend au moins un trajet pour la transmission de puissance par l'accouplement hydrodynamique (2), lequel accouplement peut être couplé en série avec une pièce mécanique de l'engrenage (3) comportant des moyens pour réaliser au moins deux vitesses, **caractérisé par** les caractéristiques suivantes :
Des moyens pour la commande de la vitesse de rotation de la roue primaire à aubes (4) de l'accouplement hydrodynamique (2), sont prévus pendant l'opération de changement de vitesses.

9. Commande (15) selon la revendication 8, **caractérisée par** les caractéristiques suivantes :
9.1 les moyens comportent un dispositif de commande avec au moins une première entrée (17) et une seconde entrée (15) et avec une sorde (18) ;
9.2 la première entrée (17) peut être couplée au dispositif d'acquisition pour déterminer l'existence d'un signal pour le changement de vitesses ;
9.3 la deuxième entrée (16) peut être couplée à un signal pour la détermination ou l'indication d'une grandeur, valeur réelle, qui décrit au moins indirectement la vitesse de rotation de la roue primaire à aubes ;
9.4 la sortie (18) peut être couplée à un dispositif pour influencer le taux de remplissage de l'accouplement hydrodynamique ;
9.5 il est prévu un dispositif de comparaison (19) qui compare la valeur réelle de la grandeur, qui décrit au moins indirectement la vitesse de rotation de la roue à aubes, (4) ,avec une valeur de consigne et qui sort, dans le cas d'un écart, une grandeur de réglage à la sortie (18)

10. Commande selon la revendication 9, **caractérisée en ce que** le dispositif comporte un élément de réglage pour ajuster l'arrivée vers la chambre de travail de l'accouplement hydrodynamique dans le cas d'une ouverture de sortie constante de l'accouplement hydrodynamique.

11. Commands selon la revendication 9, **caractérisée en ce que** le dispositif comporte un élément de réglage pour retirer des moyens de fonctionnement du circuit de travail de l'accouplement hydrodynamique.

12. Commande selon une des revendications 9 à 11, **caractérisée en ce que** le dispositif comporte un dispositif de réglage ou de commande dont la grandeur d'entrée forme une grandeur qui décrit au moins indirectement le changement du taux de remplissage et dont la grandeur de sortie est une grandeur qui commande l'élément de réglage de l'accouplement hydrodynamique.
